# EUROPÄISCHE PATENTANMELDUNG

(11) **EP 1 762 456 A1**
(43) Veröffentlichungstag der Anmeldung: **14.03.2007**
(21) Anmeldenummer: 05019500.7
(22) Anmeldetag: 08.09.2005
(51) Int. Cl.: B62B 3/18

(54) **Transportgestell, insbesondere Rollwagen**

(71) Anmelder: Werner Feil GmbH, 59909 Bestwig-Nuttlar (DE)
(72) Erfinder: Feil, Erkmar-K., 59909 Bestwig-Nuttlar (DE)
(74) Vertreter: Nunnenkamp, Jörg

(57) **Zusammenfassung**

Gegenstand der Erfindung sind ein Transportgestell sowie ein zugehöriger Kunststoffboden. Das Transportgestell verfügt über ein Gitterwandgestell (3) mit einklappbaren Seitenteilen (4). Der wenigstens eine Kunststoffboden (6) wird in dem Gitterwandgestell (3) aufgenommen. Erfindungsgemäß ist der Kunststoffboden 6 in geschlossener Sandwichbauweise aus wenigstens zwei gegenüberliegenden Kunststoffschalen (6a, 6b) mit jeweils nach außen weisender Glattfläche (7) und umlaufender Dichtkante (8) ausgeführt.

## Beschreibung

Die Erfindung betrifft ein Transportgestell, insbesondere Rollwagen, mit einem Gitterwandgestell mit einklappbaren Seitenteilen, und mit wenigstens einem in dem Gitterwandgestell aufgenommen Kunststoffboden.

Bei Transportgestellen bzw. Rollwagen handelt es sich um fahrbare Transport- und/oder Lagermittel, die üblicherweise von einer Person benutzt und bewegt werden. Beispielsweise können sich auf dem Transportgestell bzw. Rollwagen Lebensmittel befinden, die von einem Lkw abgeladen und in ein zugehöriges Geschäft gebracht werden. Da das Transportgestell im Beispielfall zusammen mit den zu transportierenden Waren im Lkw transportiert wird, ist man bestrebt, das Gewicht solcher Gestelle so gering wie möglich zu bemessen. Denn die mitgeführten Transportgestelle verringern die nutzbare Transportlast.

Aus diesem Grund greift der gattungsbildende Stand der Technik entsprechend der DE 203 11 705 U1 auf ein Gitterwandgestell zurück, folglich ein Wandgestell aus einzelnen Gitterwänden. Dadurch, dass die Seitenteile sich einklappen lassen, besteht die Möglichkeit, leere Transportgestelle raumsparend zu lagern.

Darüber hinaus kennt man durch das Gebrauchsmuster DE 26 12 672 U1 ein Transportgestell mit Laufrollen im Format eines Hochregales. Dieses greift jedoch nicht auf Kunststoffböden, sondern vielmehr gitterartige Zwischenböden zurück. Dadurch ergeben sich beim Transport von Lebensmitteln Probleme dahingehend, dass die Reinigung äußerst aufwändig ist. Im Übrigen neigen solche Transportgestelle zu einer nicht unerheblichen Geräuschentwicklung, welche besonders bei der Warenanlieferung in Innenstädten respektive Fußgängerzonen als nachteilig empfunden wird. Hier will die Erfindung insgesamt Abhilfe schaffen.

Der Erfindung liegt das technische Problem zugrunde, ein derartiges Transportgestell so weiterzuentwickeln, dass das Gewicht optimiert ist und die Reinigung erleichtert wird.

Zur Lösung dieser technischen Problemstellung ist ein gattungsgemäßes Transportgestell, insbesondere Rollwagen, im Rahmen der Erfindung dadurch gekennzeichnet, dass der Kunststoffboden in geschlossener Sandwichbauweise aus wenigstens zwei gegenüberliegenden Kunststoffschalen mit jeweils nach außen weisender Glattfläche und umlaufender Dichtkante ausgeführt ist.

Erfindungsgemäß ist der Kunststoffboden folglich insgesamt geschlossen ausgeführt, weist also ausdrücklich keine unzugänglichen Ecken oder Kanten auf, wie sie beim Stand der Technik unvermeidlich sind. Dadurch werden zunächst einmal besondere Hygieneanforderungen beachtet bzw. lässt sich der Kunststoffboden problemlos reinigen. Im Übrigen wird einer etwaigen Schmutzansammlung durch die geschlossene und glattflächige Bauweise von vornherein entgegengetreten. Glattflächig meint dabei eine weitestgehend ebene Fläche mit praktisch kaum Einkerbungen, Ausbuchtungen oder vergleichbaren Ausbildungen. Darüber hinaus schließt die insgesamt geschlossene Ausgestaltung des Kunststoffbodens natürlich nicht etwaige Einriffsöffnungen für Achsen, Verstärkungsschienen etc. aus, wie nachfolgend noch näher erläutert wird.

Durch die jeweils nach außen weisende Glattfläche des Kunststoffbodens ergibt sich ein weiterer Vorteil dahingehend, dass von dem Boden aufgenommene Produkte, beispielsweise Lebensmittel, nicht von ihrem optischen Erscheinungsbild her geschädigt werden. Etwaige Abdrücke auf den Lebensmitteln durch Gitterstäbe etc. sind folglich nicht zu befürchten. Außerdem zeichnet sich der erfindungsgemäße Kunststoffboden durch eine vergleichbare Belastbarkeit und Tragfähigkeit wie ein Gitterboden aus, wobei demgegenüber sogar noch das Gewicht verringert werden konnte. Da üblicherweise mehrere Kunststoffböden je Transportgestell zum Einsatz kommen, wirkt sich dieser Aspekt besonders deutlich aus und führt dazu, dass die zur Verfügung stehende Nutzlast in beispielsweise einem Lkw deutlich gesteigert ist.

Ferner ermöglicht der erfindungsgemäße Kunststoffboden, das solchermaßen ausgerüstete Transportgestell zu individualisieren. Denkbar ist es hier, Kundeninformationen, Logos, Tragkräfte oder andere Spezifikationen unauslöschbar in den betreffenden Kunststoffboden einzuprägen, nämlich bei dessen Herstellung, die überwiegend im Spritzgussverfahren stattfindet. Durch die nichtrostende Ausgestaltung besteht darüber hinaus die Option, den erfindungsgemäßen Kunststoffboden auch als gleichsam (verriegelbaren) Dachabschluss für das Transportgestell einzusetzen, so dass die sich im Innern befindlichen Produkte vor Umwelteinflüssen, insbesondere Regen, dauerhaft geschützt sind. Hierin sind die wesentlichen Vorteile zu sehen.

Nach vorteilhafter Ausgestaltung ist der Kunststoffboden an wenigstens einer Kante gelenkig an das Gitterwandgestell angeschlossen und kann dadurch eine Ruhe- sowie Arbeitsstellung einnehmen. Meistens wird der Kunststoffboden durch an jeweiligen Seitenkanten bzw. der Rückwand vorgesehene Gelenke mit den den betreffenden Seitenkanten gegenüberliegenden (einklappbaren) Seitenteilen und/oder der Rückwand gelenkig verbunden. Dadurch lässt sich der Kunststoffboden in der Ruhestellung nahezu vertikal im Gitterwandgestell ausrichten, während er in der Arbeitsstellung eine horizontale respektive nahezu horizontale Position einnimmt.

Auf diese Weise besteht die Möglichkeit, den Kunststoffboden bzw. die mehreren Kunststoffböden in der Ruhestellung praktisch parallel zu einer Rückwand des Gitterwandgestells auszurichten und im Anschluss daran die beiden Seitenteile einzuklappen. Auf diese Weise können mehrere erfindungsgemäße Transportgestelle in ihrer jeweiligen Ruhestellung ineinander geschoben werden, sind also "nestbar". Dadurch wird das Stauvolumen mehrerer Transportgestelle in Ruhestellung gegenüber demjenigen in Arbeitsstellung deutlich verringert, was beispielsweise den Rücktransport nach Entladen der Transportgestelle erleichtert.

Um nun von der Ruhe- in die Arbeitsstellung zu wechseln, ist es lediglich erforderlich, die einklappbaren Seitenteile von der Rückwand des Gitterwandgestells abzuklappen und an einer Basis des Transportgestells (welche die dort zumeist vorhandenen Rollen unterseitig trägt) festzulegen. Auf diese Weise formt das Gitterwandgestell mit den ausgestellten Seitenteilen in der Arbeitsstellung in Aufsicht eine U-förmige Aufnahme, in welche die jeweiligen Kunststoffböden eingeklappt werden und welche sie ausfüllen.

Im Detail ist der jeweilige Kunststoffboden in der Regel an die Rückwand des Gitterwandgestells gelenkig angeschlossen, nämlich zumeist an eine jeweilige Abkantung der Rückwand, welche zugleich den erforderlichen Raum für die in Ruhestellung befindlichen Kunststoffböden bei eingeklappten Seitenteilen definiert. Das ist selbstverständlich nicht zwingend.

Die gelenkige Verbindung kann im Detail mit Hilfe einer durchgängigen Achse oder mit Hilfe von seitlichen Lagerzapfen bewerkstelligt werden. Dabei trägt die durchgängige Achse ergänzend zur Stabilisierung des Kunststoffbodens bei. Um den Kunststoffboden zur Aufnahme der betreffenden Achse oder der Lagerzapfen zu ertüchtigen, sind in der Regel zwei seitliche Aussparungen in der umlaufenden Dichtkante vorgesehen. Alternativ oder zusätzlich können die betreffenden seitlichen Aussparungen auch unterseitig an der Dichtkante bzw. an der Unterseite des Kunststoffbodens realisiert werden. In beiden Fällen sind Diese beiden seitlichen Aussparungen in den oder an den den einklappbaren Seitenteilen des Gitterwandgestells zugewandten Seitenkanten des jeweiligen Kunststoffbodens realisiert und dienen zur Aufnahme von je nach Lagerart entsprechend geformten und abdichtenden Adaptern.

Dadurch kann der Kunststoffboden universell bei ganz verschieden ausgestalteten Transportgestellen Verwendung finden, weil er sowohl mit zwei seitlichen Lagerzapfen ausgerüstet werden kann, als auch mit der durchgängigen Achse. Ja es ist sogar möglich, auf eine gelenkige Verbindung mit dem Gitterwandgestell bzw. dessen Rückwand gänzlich zu verzichten. Dazu mag der Kunststoffboden über durchgängige Schlitze für darin im Wesentlichen toleranzfrei aufgenommene Verstärkungsschienen verfügen. Meistens sind zwei oder drei Schlitze und darin zwei oder drei Verstärkungsschienen vorgesehen, wenngleich auch nur mit einem Schlitz und einer Verstärkungsschiene gearbeitet werden kann. In diesem Zusammenhang versteht es sich, dass die eine oder die mehreren Verstärkungsschienen auch als (frontseitiges oder mittiges) Auflager für den gelenkig angeschlossenen Kunststoffboden fungieren können.

Diese Verstärkungsschienen überragen jeweils den Kunststoffboden seitlich und lassen sich mit vorgesehenen Aussparungen unmittelbar in das Gitterwandgestell einhängen, ohne dass es einer zusätzlichen gelenkigen Verbindung des Kunststoffbodens mit dem Gitterwandgestell bedarf. Selbstverständlich kann eine solche gelenkige Verbindung ergänzend realisiert werden.

Die beiden Kunststoffschalen des Kunststoffbodens sind im Wesentlichen gleich mit äußerer Glattfläche und darauf innenseitig aufstehenden Verstärkungsrippen ausgebildet. Dadurch erlangt der Kunststoffboden die erforderliche Stabilität und neigt nicht zum Durchbiegen. Um nun diese beiden Kunststoffschalen miteinander zu dem Kunststoffboden zu vereinigen, greift die Erfindung in der Regel auf einen so genannten Spiegelschweißvorgang oder eine vergleichbare Verbindungstechnik zurück.

Beim Spiegelschweißvorgang werden die beiden Kunststoffschalen größtenteils gegenüberliegend zu einem Schweißspiegel angeordnet, welcher demzufolge in der Art einer Spiegelfläche zwischen den beiden Kunststoffschalen platziert ist. Nun werden die beiden Kunststoffschalen gegen den Schweißspiegel gedrückt, welcher erhitzt wird und folglich die aus einem thermoplastischen Kunststoff wie PE (Polyethylen) oder auch PP (Polypropylen) gefertigten Kunststoffschalen kopfseitig der Verstärkungsrippen zum Schmelzen bringt. Wenn nun der Schweißspiegel entfernt wird und die Kunststoffschalen mit ihren jeweiligen Verstärkungsrippen aufeinander gedrückt werden, so lässt sich der erfindungsgemäße Kunststoffboden mit definierter Stärke und in geschlossener Sandwichbauweise realisieren. - Um den Kunststoffboden einwandfrei im Gitterwandgestell zu haltern und gegebenenfalls zu verriegeln, verfügt der Kunststoffboden schließlich noch über seitliche Aussparungen zum Eingriff von Auflager- und/oder Verriegelungshaken.

Im Ergebnis werden ein Transportgestell sowie ein Kunststoffboden für Transportgestelle vorgestellt, die durch besondere Vorteile zu überzeugen wissen. Hier ist zunächst einmal das geringe Gewicht zu nennen, welches die nutzbare Last deutlich erhöht. Gleichzeitig werden Hygienevorschriften problemlos eingehalten, weshalb sich das Transportgestell bzw. der Kunststoffboden besonders für den Einsatz in Krankenhäusern, Altenheimen etc. eignet. Darüber hinaus sichert der Kunststoffboden einen praktisch klapperfreien Transport, so dass die Geräuschemissionen deutlich gegenüber dem vorbekannten Stand der Technik reduziert sind. Schließlich lassen sich Kunststoffböden mit Kosten- und Gewichtsvorteilen gegenüber Gitterböden herstellen.

Im Folgenden wird die Erfindung anhand einer lediglich ein Ausführungsbeispiel darstellenden Zeichnung näher erläutert; es zeigen:
- Fig. 1: ein erfindungsgemäßes Transportgestell in Arbeitsstellung,
- Fig. 2: den Gegenstand nach Fig. 1 in Ruhestellung,
- Fig. 3: den Kunststoffboden schematisch,
- Fig. 4: eine im Kunststoffboden optional aufgenommene Verstärkungsschiene,
- Fig. 5: ein Detail des Kunststoffbodens mit Adapter im Bereich der seitlichen Aufnahme,
- Fig. 6: einen anderen Adapter entsprechend der Fig. 5 und
- Fig. 7 und 8: weitere Detailansichten des Kunststoffbodens,

In den Figuren ist ein Transportgestell, nach dem Ausführungsbeispiel ein Rollwagen mit Basis 1 und von der Basis 1 getragenen vier Rollen 2 dargestellt. Grundsätzlich könnten auch nur drei Rollen 2 realisiert sein. Zum grundsätzlichen Aufbau gehören ein Gitterwandgestell 3 mit einklappbaren Seitenteilen 4 und einer Rückwand 5 sowie wenigstens ein Kunststoffboden 6, welcher in dem Gitterwandgestell 3 aufgenommen wird. Im Rahmen der Ausführungsbeispiele sind mehrere Kunststoffböden 6 realisiert.

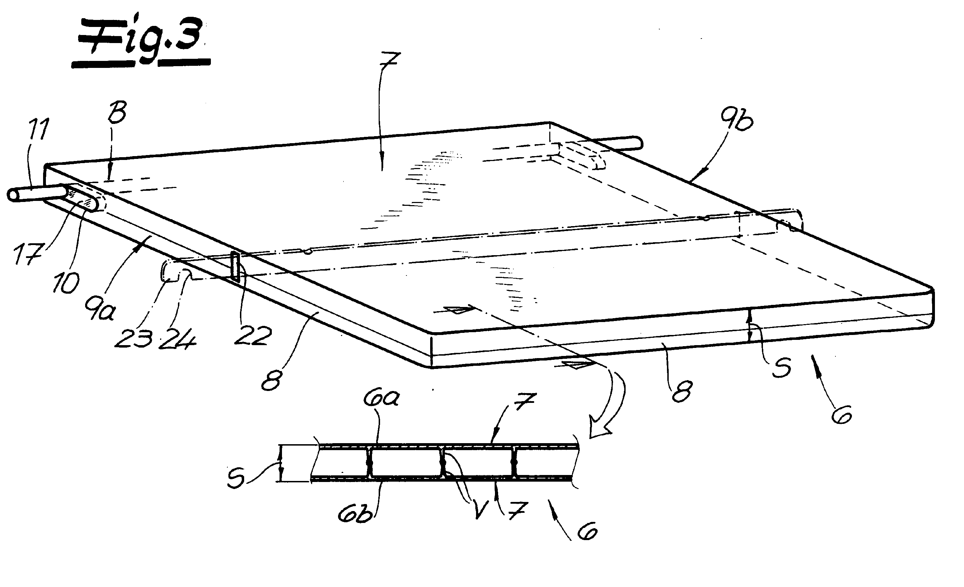

Der jeweilige Kunststoffboden 6 kann als Basis 1 für das Gitterwandgestell 3 fungieren, als Zwischenboden und schließlich als Kopfabdeckung, was jedoch nur angedeutet ist. Das Besondere an dem Kunststoffboden 6 ist der Umstand, dass dieser in geschlossener Sandwichbauweise ausgeführt ist und sich ausweislich der Fig. 3 aus zwei gegenüberliegenden Kunststoffschalen 6a, 6b zusammensetzt, die im Wesentlichen gleich ausgeführt sind. Die beiden Kunststoffschalen 6a, 6b verfügen über jeweils eine nach außen weisende Glattfläche 7 und formen zusammengenommen eine umlaufende Dichtkante 8. Dadurch ist der Kunststoffboden 6 insgesamt geschlossen ausgeführt und es besteht nicht die Gefahr, dass Feuchtigkeit, Schmutz etc. ins Innere eindringen können. Insbesondere kann sich derartiger Schmutz nicht an oder im Bereich von Verstärkungsrippen V der Kunststoffschalen 6a, 6b ansammeln, die jeweils innenseitig auf den äußeren Glattflächen 7 aufstehen.

Zur Herstellung des Kunststoffbodens 6 werden die beiden Kunststoffschalen 6a, 6b in gegenüberliegender Ausrichtung entsprechend der Fig. 3 beidseitig eines Schweißspiegels platziert, welcher die Verstärkungsrippen V jeweils kopfseitig zum Schmelzen bringt. Nach Entfernen des Schweißspiegels werden die beiden Kunststoffschalen 6a, 6b gegeneinander gedrückt, bis der Kunststoffboden 6 eine vorgegebene und gewünschte Stärke S aufweist. Durch diesen Vorgang wird gleichzeitig die umlaufende und geschlossene Dichtkante 8 definiert, welche sich aus zwei randseitigen Verstärkungsrippen V der Kunststoff(halb)schalen 6a, 6b zusammensetzt. - Selbstverständlich sind auch andere Verbindungstechniken für die beiden Kunststoff(halb)schalen 6a, 6b denkbar und werden vom Erfindungsgedanken umfasst.

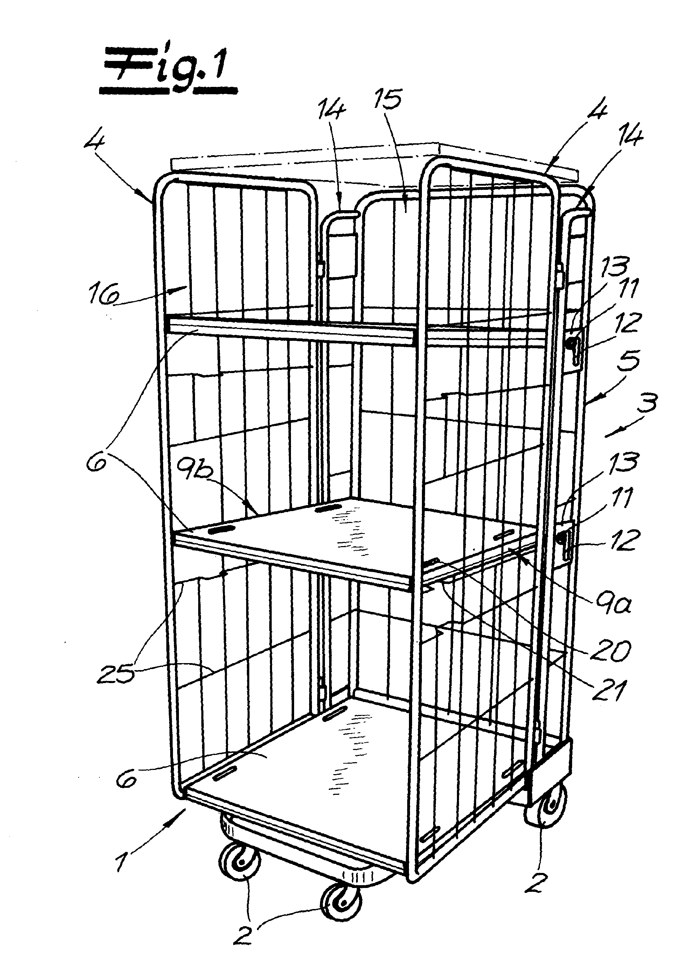

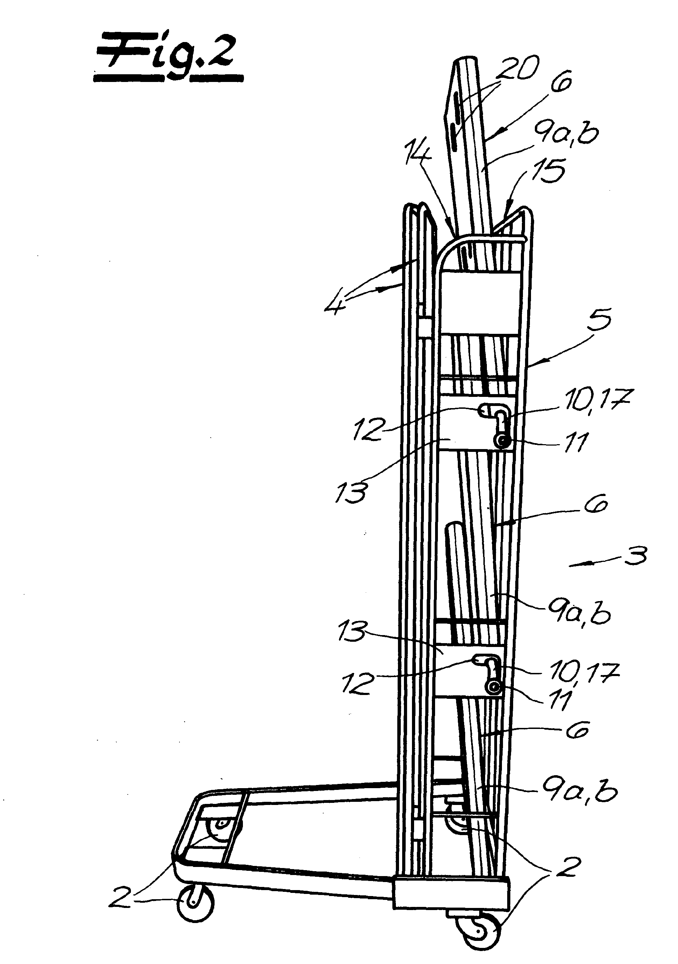

Anhand der Fig. 1 und 2 erkennt man, dass der Kunststoffboden 6 an wenigstens einer Kante 9a, 9b gelenkig an das Gitterwandgestell 3 angeschlossen ist. Dadurch lässt sich der Kunststoffboden 6 in die Ruhestellung nach Fig. 2 in im Wesentlichen senkrechter Ausrichtung überführen und kann der Kunststoffboden 6 darüber hinaus seine Arbeitsstellung nach Fig. 1 einnehmen, um zu transportierende und nicht dargestellte Waren aufzunehmen.

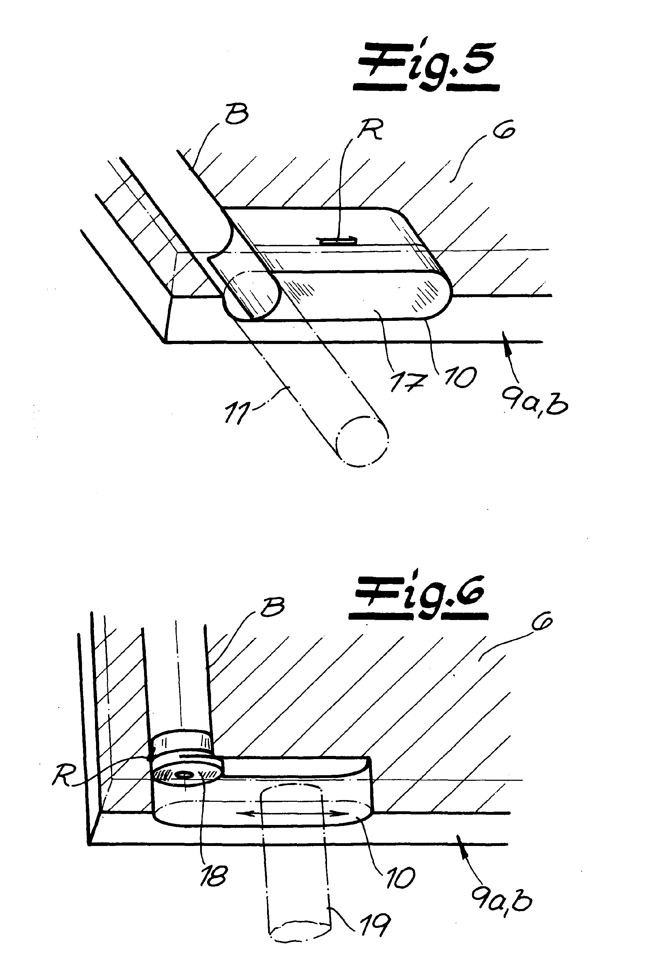

Die gelenkige Verbindung ist im Detail so realisiert, dass die den beiden einklappbaren Seitenteilen 4 unmittelbar benachbarten Seitenkanten 9a, 9b des Kunststoffbodens 6 über eine entsprechende Gestaltung verfügen, nämlich eine in den Fig. 5 und 6 gezeigte Ausnehmung 10. Durch diese Ausnehmung 10 wird im Beispielfall der Fig. 5 eine durchgängige Achse 11 bzw. ein zylindrischer (Metall-)Stab hindurchgeführt, welcher den Kunststoffboden 6 bzw. die Seitenkanten 9a und 9b jeweils überragt und in einer Lochführung 12 aufgenommen wird. Die Lochführung 12 ist im Beispielfall der Fig. 1 und 2 L-förmig ausgestaltet, um die beiden Stellungen (Ruhestellung nach Fig. 2 und Arbeitsstellung nach Fig. 1) realisieren zu können. Die Lochführung 12 findet sich in einer Lagerplatte 13, die ihrerseits an die Rückwand 5 angeschlossen ist.

Im Beispielfall und nicht einschränkend verfügt die Rückwand 5 über zwei seitliche Abkantungen 14, die in Aufsicht in Verbindung mit der Rückwand 5 eine U-förmige Aufnahme 15 für die Kunststoffböden 6 zur Verfügung stellen. Tatsächlich wird diese in Aufsicht U-förmige Aufnahme 15 in Ruhestellung des Transportgestells bzw. der Kunststoffböden 6 von den eingeklappten Seitenteilen 4 verschlossen, wie dies die Fig. 2 unmittelbar deutlich macht.

Um das Transportgestell in seine Arbeitsstellung zu überführen, ist es lediglich erforderlich, die Seitenteile 4 in die Stellung nach der Fig. 1 zu überführen. D. h. die Seitenteile 4 werden gegenüber den Abkantungen 14 gelenkig ausgeschwenkt, bis sie im Wesentlichen gleichgerichtet zu den beiden seitlichen Abkantungen 14 an der Rückwand 5 verlaufen. Dadurch wird nun eine vergrößerte und in Aufsicht wiederum U-förmig ausgebildete Aufnahme 16 zur Verfügung gestellt, welche die heruntergeklappten Kunststoffböden 6 in ihrer Arbeitsstellung ausfüllen.

Wenn mit der durchgängigen Achse 11 zum gelenkigen Anschluss des jeweiligen Kunststoffbodens 6 an das Gitterwandgestell 3 gearbeitet wird, ist es erforderlich, die seitliche Aussparung 10 im Kunststoffboden 6 bzw. in der Dichtkante 8 bis auf eine frei gelassene Bohrung B für die Achse 11 zu verschließen. Zu diesem Zweck schlägt die Erfindung in den Fig. 5 und 6 je nach Lagerart entsprechend geformte und abdichtende Adapter 17, 18 vor, die mit ihrem Rastnasen R entsprechend eingeclipst werden. Der Adapter 17 kommt in Verbindung mit der durchgängigen Achse 11 zum Einsatz und stellt sicher, dass die Aussparung 10 bis auf die Bohrung B für die Achse 11 verschlossen ist.

Alternativ hierzu sorgt der Adapter 18 bei nicht verwendeter Achse 11 dafür, dass die im Innern des Kunststoffbodens 6 zur Aufnahme der Achse 11 vorgesehene Bohrung B abgedichtet wird. Denn alternativ zu der durchgängigen Achse 11 kann auch auf seitliche und nicht durchgängige Lagerzapfen 19 entsprechend der Fig. 6 zurückgegriffen werden. Diese beiden Lagerzapfen 19 sind in der Lagerplatte 13 verschraubt, die in diesem Fall keine Lochführung 12 aufweist. Vielmehr gewährleistet die Aussparung 10 im Kunststoffboden 6 die notwendige Beweglichkeit, um den Kunststoffboden 6 zwischen der Arbeitsstellung und Ruhestellung hin- und herschwenken zu können.

In den Fig. 1 und 2 erkennt man noch mehrere seitliche Aussparungen 20, die jeweils randseitig des Kunststoffbodens 6 verlaufen und mit Auflager- und/oder Verriegelungshaken 21 zusammenwirken. Dadurch werden die Kunststoffböden 6 - meistens in ihrer Arbeitsstellung - in dem Gitterwandgestell 3 verankert und zentriert. Zusätzlich mag auch eine Verriegelung hiermit bewerkstelligt werden, so dass das Transportgestell vor unbefugtem Zugriff gesichert ist.

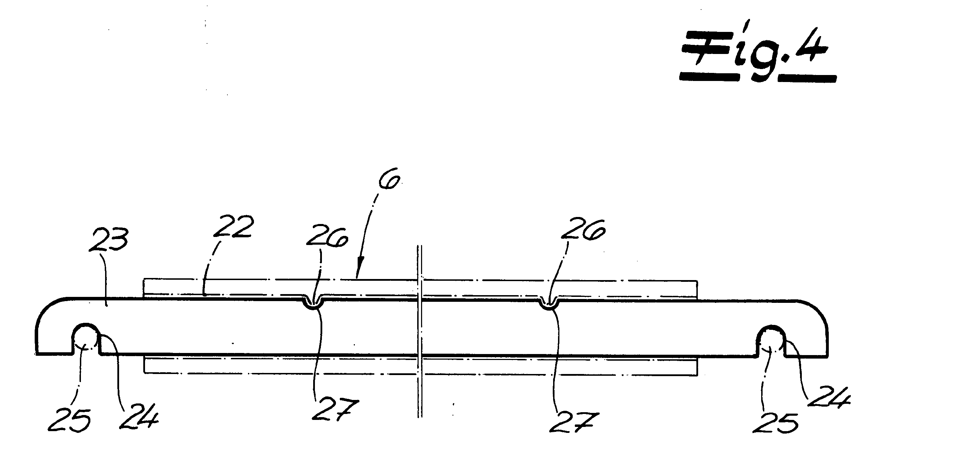

In der Fig. 4 ist noch eine Option für den jeweiligen Kunststoffboden 6 dargestellt. Denn der Kunststoffboden 6 mag mit einem oder mehreren durchgängigen Schlitzen 22 ausgerüstet werden, um darin im Wesentlichen toleranzfrei eine oder mehrere Verstärkungsschienen 23 aufzunehmen. Mit Hilfe der einen oder der mehreren Verstärkungsschienen 23 kann der Kunststoffboden 6 - auch ohne gelenkigen Anschluss an das Gitterwandgestell 3 - von dem Gitterwandgestell 3 aufgenommen werden.

Dazu überragt die jeweilige Verstärkungsschiene 23 den Kunststoffboden 6 jeweils seitlich und ist im Bereich dieses Überstandes mit Aussparungen 24 ausgerüstet, um die Verstärkungsschiene 23 jeweils auf einen angedeuteten Gitterstab 25 des Gitterwandgestells 3 auflegen zu können. Damit die Verstärkungsschiene 23 im Innern des Kunststoffbodens 6 fixiert ist, greift wenigstens ein Vorsprung 26 in dem durchgängigen Schlitz 22 in eine ihm zugeordnete Ausnehmung 27 der Verstärkungsschiene 23 dann ein, wenn sich die Verstärkungsschiene 23 in ihrer richtigen Position befindet. Im Rahmen der Variante nach der Fig. 4 sind zwei Vorsprünge 26 im jeweiligen Schlitz 22 und zwei zugehörige Ausnehmungen 27 in der korrespondierenden und eingesteckten Verstärkungsschiene 23 realisiert.

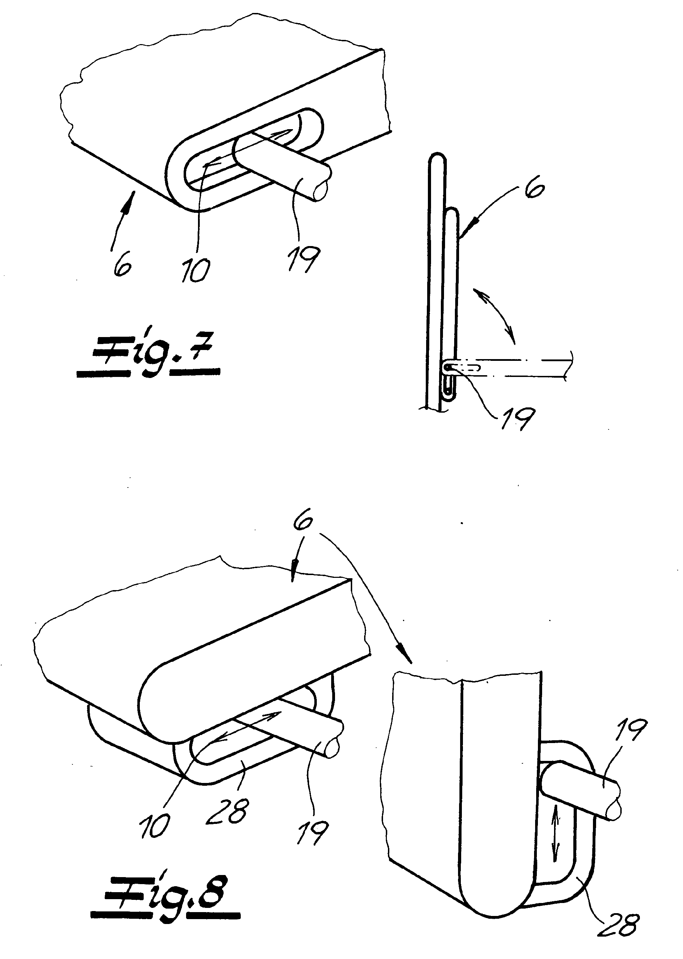

Anhand der Fig. 7 und 8 erkennt man, dass der jeweilige Kunststoffboden 6 mit Hilfe der beidseitigen und nicht durchgängigen Lagerzapfen 19 arretiert werden kann, und zwar in der durchgezogen im rechten Teil der Fig. 7 dargestellten Ruhestellung und in der strichpunktiert gezeigten Arbeitsstellung. Das wird dadurch erreicht, dass die beiden sich gegenüberliegenden Lagerzapfen 19 in die langlochartige Aussparung 10 eingreifen und mit dem in der Fig. 7 links dargestellten Führungsspiel ausgerüstet sind.

Anhand der Fig. 8 wird deutlich, dass die Aussparung 10 auch unterseitig des Kunststoffbodens 6 vorgesehen werden kann. Dann mag an den Kunststoffboden 6 unterseitig ein Bügel 28 mit der Aussparung 10 angeschlossen sein, welcher die beschriebene Funktion übernimmt. Im Rahmen der Erfindung kann der besagte Bügel 28 aus einem Metall hergestellt und mit dem Kunststoffboden 6 verbunden sein. Es ist aber auch möglich, den Bügel 28 zusammen mit dem Kunststoffboden 6 insgesamt aus einem Kunststoff zu fertigen und zwar in einem einzigen Herstellungsschritt.

In jedem Fall gewährleistet das Zusammenspiel der üblicherweise an die gegenüberliegenden Lagerplatten 13 an den Abkantungen 14 angeschlossenen Lagerzapfen 19 mit den jeweiligen Aussparungen 10 in oder am Kunststoffboden 6, dass der Kunststoffboden 6 die Ruhe- und Arbeitsstellung wie gewünscht einnehmen kann. - Dabei sind die Lagerzapfen 19 meistens - wie die durchgängige Achse 11 - metallisch ausgeführt, wenngleich grundsätzlich auch auf andere Werkstoffe zurückgegriffen werden kann.

## Patentansprüche

1. Transportgestell, insbesondere Rollwagen, mit einem Gitterwandgestell (3) mit einklappbaren Seitenteilen (4), und mit wenigstens einem in dem Gitterwandgestell (3) aufgenommenen Kunststoffboden (6), **dadurch gekennzeichnet, dass** der Kunststoffboden (6) in geschlossener Sandwichbauweise aus wenigstens zwei gegenüberliegenden Kunststoffschalen (6a, 6b) mit jeweils nach außen weisender Glattfläche (7) und umlaufender Dichtkante (8) ausgeführt ist.

2. Transportgestell nach Anspruch 1, **dadurch gekennzeichnet, dass** der Kunststoffboden (6) an wenigstens einer Kante (9a, 9b) gelenkig an das Gitterwandgestell (3) angeschlossen ist und **dadurch** eine Ruhe- sowie Arbeitsstellung einnehmen kann.

3. Transportgestell nach Anspruch 1 oder 2, **dadurch gekennzeichnet, dass** der Kunststoffboden (6) an eine Rückwand (5) des Gitterwandgestells (3) gelenkig angeschlossen ist.

4. Transportgestell nach einem der Ansprüche 1 bis 3, **dadurch gekennzeichnet, dass** der Kunststoffboden (6) mittels einer durchgängigen Achse (11) oder mit Hilfe von seitlichen Lagerzapfen (19) an das Gitterwandgestell (3) gelenkig angeschlossen ist.

5. Transportgestell nach einem der Ansprüche 1 bis 4, **dadurch gekennzeichnet, dass** der Kunststoffboden (6) zur Aufnahme der Achse (11) oder der Lagerzapfen (19) zwei seitliche und/oder unterseitige Aussparungen (10) in oder an der Dichtkante (8) zur Aufnahme von je nach Lagerart entsprechend geformten und abdichtenden Adaptern (17, 18) aufweist.

6. Transportgestell nach einem der Ansprüche 1 bis 5, **dadurch gekennzeichnet, dass** die beiden Kunststoffschalen (6a, 6b) des Kunststoffbodens (6) im Wesentlichen gleich mit äußerer Glattfläche (7) und darauf innenseitig aufstehenden Verstärkungsrippen (V) ausgebildet sind.

7. Transportgestell nach einem der Ansprüche 1 bis 6, **dadurch gekennzeichnet, dass** die beiden Kunststoffschalen (6a, 6b) des Kunststoffbodens (6) durch einen Spiegelschweißvorgang oder dergleichen Verbindungstechnik zu dem Kunststoffboden (6) vereinigt sind.

8. Transportgestell nach einem der Ansprüche 1 bis 7, **dadurch gekennzeichnet, dass** der Kunststoffboden (6) mit seitlichen Aussparungen (20) zum Eingriff von Auflager- und/oder Verriegelungshaken (21) ausgerüstet ist.

9. Transportgestell nach einem der Ansprüche 1 bis 8, **dadurch gekennzeichnet, dass** der Kunststoffboden (6) zumindest einen durchgängigen Schlitz (22) für eine hierin im Wesentlichen toleranzfrei aufgenommene Verstärkungsschiene (23) aufweist.

10. Kunststoffboden für Transportgestelle, insbesondere Rollwagen, mit Gitterwandgestell (3) **gekennzeichnet durch** eine geschlossene Sandwichbauweise aus wenigstens zwei gegenüberliegenden Kunststoffschalen (6a, 6b) mit jeweils nach außen weisender Glattfläche (7) und umlaufender Dichtkante (8).

## Geänderte Patentansprüche

### Geänderte Patentansprüche gemäss Regel 86(2) EPÜ.

**1.** Transportgestell, insbesondere Rollwagen, mit einem Gitterwandgestell (3) mit einklappbaren Seitenteilen (4), und mit wenigstens einem in dem Gitterwandgestell (3) aufgenommenen Kunststoffboden (6), welcher an wenigstens einer Kante gelenkig an das Gitterwandgestell (3) angeschlossen ist und dadurch eine Ruhe- sowie Arbeitsstellung einnimmt, **dadurch gekennzeichnet, dass**
- der Kunststoffboden (6) in geschlossener Sandwichbauweise aus wenigstens zwei gegenüberliegenden Kunststoffschalen (6a, 6b) mit jeweils nach außen weisender Glattfläche (7) und umlaufender Dichtkante (8) ausgeführt ist und
- zur Aufnahme einer Achse (11) oder von Lagerzapfen (19) zwei seitliche und/oder unterseitige Aussparungen (10) in oder an der Dichtkante (8) zur Aufnahme von je nach Lagerart entsprechend geformten und abdichtenden Adaptern (17, 18) aufweist.

**2.** Transportgestell nach Anspruch 1, **dadurch gekennzeichnet, dass** der Kunststoffboden (6) an wenigstens einer Kante (9a, 9b) gelenkig an das Gitterwandgestell (3) angeschlossen ist und dadurch eine Ruhe- sowie Arbeitsstellung einnehmen kann.

**3.** Transportgestell nach Anspruch 1 oder 2, **dadurch gekennzeichnet, dass** der Kunststoffboden (6) an eine Rückwand (5) des Gitterwandgestells (3) gelenkig angeschlossen ist.

**4.** Transportgestell nach einem der Ansprüche 1 bis 3, **dadurch gekennzeichnet, dass** der Kunststoffboden (6) mittels einer durchgängigen Achse (11) oder mit Hilfe von seitlichen Lagerzapfen (19) an das Gitterwandgestell (3) gelenkig angeschlossen ist.

**5.** Transportgestell nach einem der Ansprüche 1 bis 4, **dadurch gekennzeichnet, dass** die beiden Kunststoffschalen (6a, 6b) des Kunststoffbodens (6) im Wesentlichen gleich mit äußerer Glattfläche (7) und darauf innenseitig aufstehenden Verstärkungsrippen (V) ausgebildet sind.

**6.** Transportgestell nach einem der Ansprüche 1 bis 5, **dadurch gekennzeichnet, dass** die beiden Kunststoffschalen (6a, 6b) des Kunststoffbodens (6) durch einen Spiegelschweißvorgang oder dergleichen Verbindungstechnik zu dem Kunststoffboden (6) vereinigt sind.

**7.** Transportgestell nach einem der Ansprüche 1 bis 6, **dadurch gekennzeichnet, dass** der Kunststoffboden (6) mit seitlichen Aussparungen (20) zum Eingriff von Auflager- und/oder Verriegelungshaken (21) ausgerüstet ist.

**8.** Transportgestell nach einem der Ansprüche 1 bis 7, **dadurch gekennzeichnet, dass** der Kunststoffboden (6) zumindest einen durchgängigen Schlitz (22) für eine hierin im Wesentlichen toleranzfrei aufgenommene Verstärkungsschiene (23) aufweist.
